# EUROPEAN PATENT SPECIFICATION

(11) **EP 4 072 879 B1**
(45) Date of publication and mention of the grant of the patent: **29.01.2025**
(21) Application number: 19836521.5
(22) Date of filing: 12.12.2019
(51) Int. Cl.: B60J 5/12, B60P 3/42, B62D 47/00

(54) **VEHICLE TRUNK WITH TWO FOLDS UPPER LID**
KOFFERRAUM MIT OBERER KLAPPE MIT DOPPELFALTUNG
COFFRE DE VÉHICULE AVEC COUVERCLE SUPÉRIEUR À DEUX PLIS

(43) Date of publication of application: 19.10.2022
(73) Proprietor: Stellantis Auto SAS, 78300 Poissy (FR)
(72) Inventor: WANG, Ziye, Shanghai 200233 (CN); BLOSSIER, Jean Emmanuel, 25200 Montbéliard (FR); XING, Xiaomin, Shanghai 201900 (CN); ZHU, Yi, Shanghai 200233 (CN); WANG, Wei, Shanghai 200233 (CN)
(74) Representative: BCIP
(86) International application number: PCT/IB2019/060686
(87) International publication number: WO 2021/116736

(56) References cited:
- CN-A- 102 582 700
- CN-A- 102 897 234
- CN-A- 102 910 215
- FR-A1- 2 898 856

## Description

### Technical field

The invention is directed to the field of vehicles, more particularly to road vehicles and even more particularly to the bodywork of such vehicles.

### Background art

Prior art patent document published FR 2 898 856 A1 discloses a vehicle of the sedan type, i.e. in a three-box configuration with separate compartments for engine, passenger and cargo, with a bodywork forming a rear trunk that can be converted to a loading platform as in a pick-up vehicle. To that end, the upper lid is two-folds, i.e. comprises a first front element pivotally mounted to the bodywork and a second rear element pivotally mounted to the first element. Both first and second elements are configured for being folded onto each other and also the pivotally mounting of the first element to the bodywork is vertically slidable so that the two folded elements can be stowed for providing an opened cargo volume, also during driving. This arrangement is interesting for converting a classical trunk of a sedan type vehicle into a loading volume as in a pick-up type vehicle. This requires however a proper manipulation of the elements of the upper lid for folding the second element onto the first one. The slidable hinges, at the pivotally mounting of the first element, can be sophisticated and expensive. It is also generally desirable to maximize the opening configurations of a trunk. From the prior art CN 102910215 A1 and CN 102 897 234 B are also known. Document CN 102910215 A1 discloses a vehicle with a trunk lid according to the preamble of claim 1.

### Summary of invention

### Technical Problem

The invention has for technical problem to provide to overcome at least one of the drawbacks of the above mentioned prior art. More particularly, the invention has for technical problem to provide a trunk, preferably for a sedan type vehicle, with a lid enabling various postures and possibilities for accessing the volume of the trunk while keeping the costs low and ensuring a proper water tightness.

### Technical solution

The invention is directed to a vehicle with a bodywork comprising a trunk with an upper lid as defined by the features in claim 1.

According to a preferred embodiment, the first and second elements are aligned and horizontal in a trunk closing position.

According to a preferred embodiment, the at least one retainer is mounted on an inner panel of each of the first and second elements.

According to the invention, each of the at least one retainer comprises a support attached to the second edge of the first element and an arm pivotally mounted on the support and extending along an inner face of the second element, said arm being slidable along a guide on said inner face of said second element and comprising at a distal end means for abutting with said guide.

According to the invention, the means for abutting with the guide is also configured for engaging with said guide so as to hold the second element in a trunk opening position.

According tothe invention, the arm comprises two longitudinal portions of steel wire progressively converging towards the distal end of the arm and thereafter abruptly diverging and again converging so as to form the means for engaging and abutting, the guide forming a circular groove slidably engaging with the two longitudinal portions of steel wire, and able, under application of a longitudinal load, to engage with the means for abutting and engaging by elastically deforming the two longitudinal portions of steel wire.

According to a preferred embodiment, the first element comprises, at two opposed lateral positions adjacent the second edge of said first element, locking elements for engaging with lateral fixed parts of the bodywork inside the trunk, said locking elements being manually operable by a user having opened the second element.

According to a preferred embodiment, in a trunk fully opening position of the upper lid, the first element is vertical or inclined of not more than 20° relative to the vertical, and the second element is horizontal or inclined of not more than 20° relative to the horizontal.

According to a preferred embodiment, the trunk is a rear end of the vehicle, the second element being at the rear of the first element.

According to a preferred embodiment, the trunk comprises a rear lid with a first edge pivotally mounted on a fixed part of the bodywork and a second edge adjacent the second edge of the second element of the upper lid when both said upper and rear lids are in trunk closing positions.

### Advantages of the invention

The invention is particularly interesting in that it provides various postures and possibilities for accessing the volume of the trunk of a vehicle, in particular of the sedan type. The fact of retaining the second element in a trunk opening position relative to the first element is very useful, not only with the first element in a trunk closing position but also when it is in a trunk opening position. The forces exerted on the retainers remains limited due to the limited size and therefore weight of the second element, resulting from the division of the upper lid into two elements. Also, the space necessary above the trunk for enabling the different movements of the first and second elements is limited, enabling operation of the upper lid in restricted areas liked parking houses or underground parking areas.

### Brief description of the drawings

Figure 1 is a perspective view of the rear trunk of a vehicle according to the invention, where the upper lid is in a trunk partial opening position.
Figure 2 corresponds to figure 1, where the upper lid is in a trunk full opening position.
Figure 3 corresponds to figures 1 and 2, where the upper lid is in the trunk partial opening position and the rear lid is a trunk opening position.
Figure 4 corresponds to figures 1 to 3, where the upper lid is in the trunk full opening position and the rear lid is a trunk opening position.
Figure 5 is a rear view of the rear lid of the vehicle of figures 1 to 4.
Figure 6 is a rear view of the front element of the upper lid.
Figure 7 is a detailed view of one of the locking elements between the first element and the bodywork of the vehicle.
Figure 8 is a rear view of the rear element of the upper lid.
Figure 9 is a detailed view of the retainer limiting a pivoting movement of the rear element relative to the front element.
Figure 10 is a longitudinal sectional view of the upper and rear lids in a trunk closing position.

### Description of an embodiment

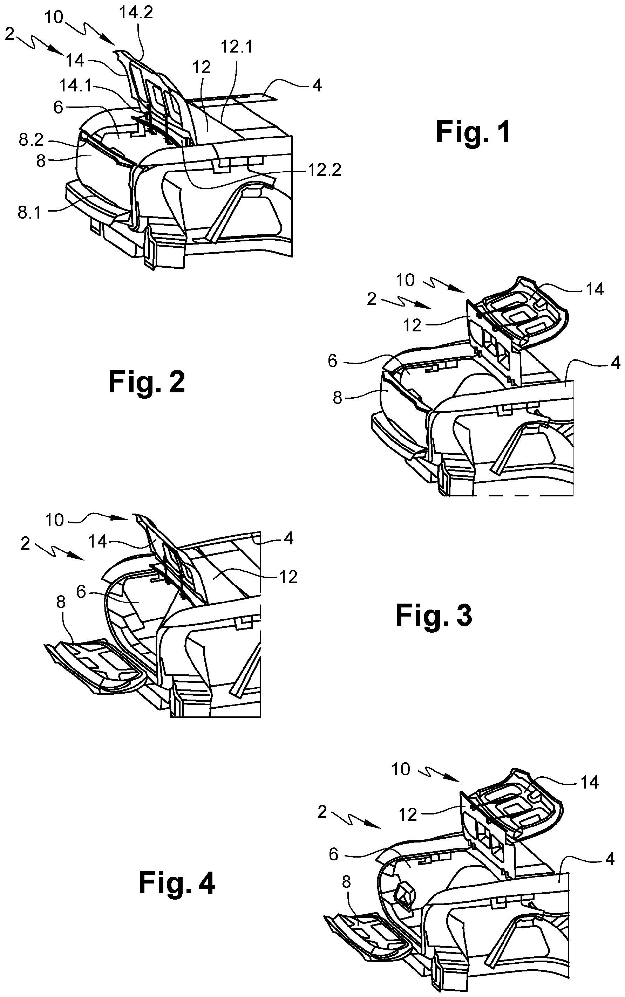

Figures 1 to 4 are perspective views of the bodywork of a vehicle according to the invention, showing a rear trunk with a rear lid and an upper lid taking different positions and providing different opening positions of the trunk. In these features, the bodywork is incomplete in that external elements like the rear bumper and the rear wings are not represented.

The vehicle 2 comprises has a bodywork 4 which comprises a rear trunk 6 with a rear lid 8 and an upper lid 10. The rear lid 8 is pivotally mounted at its lower and first edge 8.1 to a fixed lower part of the bodywork 4. It can therefore pivot between a vertical or upright trunk closing position and a horizontal trunk opening position. The upper lid 10 comprises a front and first element 12 pivotally mounted at its front and first edge 12.1 at a fixed part of the bodywork 4, and a rear and second element 14 pivotally mounted at its front and first edge 14.1 at a rear and second edge 12.2 of the front and first element 12.

In figure 1, the rear lid 8 is in a trunk closing position whereas the upper lid 10 is in a trunk partial opening position, i.e. where the front and first element 12 is in a trunk closing position whereas the rear and second element 14 is in a trunk opening position. In other words, only the rear and second element 14 provides access to the trunk 6, e.g. for objects of a reduced size and weight. This way of opening the trunk is particular practical for objects which are likely to lean on the side walls of the trunk, including the rear one formed by the inner face of the rear lid 8, like filled shopping bags.

Still with reference to figure 1, for closing the trunk 8, the rear and second element 14 is pivoted backward and downward so that its rear and second edge 14.2 becomes adjacent to the upper and second edge 8.2 of the rear lid 8. A lock is provided at the rear and second edge 14.2 of the rear and second element 14.

In figure 2, the upper lid 10 is in a trunk full opening position, i.e. where the front and first element 12 is also pivoted, meaning that the rear and second element 14 is pivoted together with the front and first element 12. This results in a configuration of the upper lid 10 maximizing the access to the trunk 6. This trunk opening configuration is particularly useful for grasping objects lying on a front part of the trunk floor, otherwise difficult to access.

In figure 3, in comparison with figure 1, the rear lid 8 is lowered in a trunk opening position, meaning that the access section to the trunk 6 is increased. This trunk opening configuration is particularly useful for loading or unloading heavier objects which cannot be easily lifted over the rear lid 8 when in a closed upright position, e.g. a suitcase or any similar object.

In figure 4, the rear lid 8 is in a trunk opening position, as in figure 3, and the upper lid 10 is in a trunk full opening position, as in figure 2. This trunk opening configuration is particularly useful for loading or unloading bulky objects which require a maximum upper opening, e.g. a stroller, a wheelchair or the like.

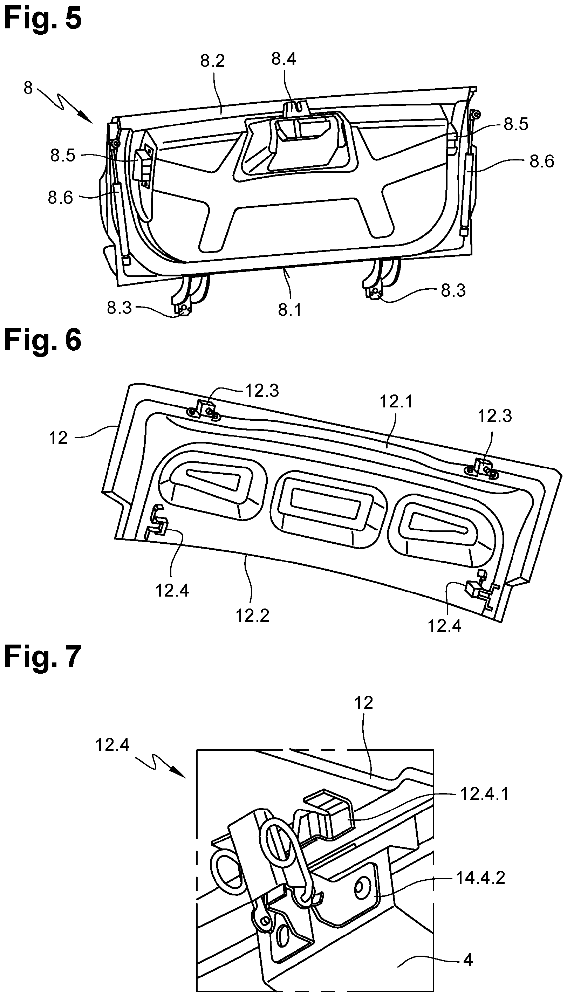

Figure 5 is a detailed view of the inner face of rear element 8. We can observe the presence of two hinges 8.3 attached at the first and lower edge 8.1 of the rear element 8. These hinges 8.3 show a pivoting axis which is for instance off-set in a rearward direction, for avoiding any interference with the rear bumper (not illustrated). We can also observe the presence of an upper lock 8.4 at a central position at the second and upper edge 8.2. That upper lock 8.4 is configured for engaging with the upper lid 10, more particularly with the second and rear edge 14.2 of the second and rear element 12 (see figure 1). Also, two lateral locks 8.5 are provided, configured for cooperating with corresponding lock parts, i.e. lock strikes, on lateral elements of the bodywork, for securing the rear lid 8 in a trunk closing position, as illustrated in figures 1 and 2. Also, two gas springs 8.6 are provided laterally for dampening and limiting the pivoting movements of the rear element 8.

Figure 6 is a detailed view of the inner face of the first and front element 12 of the upper lid 10 (figure 1). We can observe the presence of two hinges 12.3 at the first and front edge 12.1, to be mounted to a fixed part of the bodywork. Also, lateral locks 12.4 are provided adjacent the second and rear edge 12.2, these lateral locks being configured for securing the first element 12 in a trunk closing position to the bodywork.

Figure 7 is a detailed view of one of the lateral locks 12.4. The lateral lock 12.4 comprises for instance a first part 12.4.1 that is mounted on the first element 12 of the upper lid, and a second part 12.4.2 that is mounted on a fixed part of the bodywork 4, inside the trunk. The first part 12.4.1 forms an anchor that is fixed with the first element 12 of the upper lid whereas the second part 12.4.2 comprises a bracket rigidly mounted to the fixed part of the bodywork and a lever pivotally mounted on said bracket and supporting a resilient hook that is mounted on the lever in an eccentric manner relative to the pivoting axis of said lever on the bracket. By manually pushing or pulling on the lever, the resilient hook can be released from the first part 12.4.1 of the lateral lock 12.4 or brought into tension. The lever is spring loaded (not visible) around its pivoting axis on the bracket. The resilient hook is advantageously made of spring steel wire so as to form two lateral loops providing resiliency in traction and grasping means for a user. The above detailed lateral lock is an example, being understood that other lateral locks can be considered. Also the above detailed features of the lateral lock can be taken in isolation or associated with some of others in any combination.

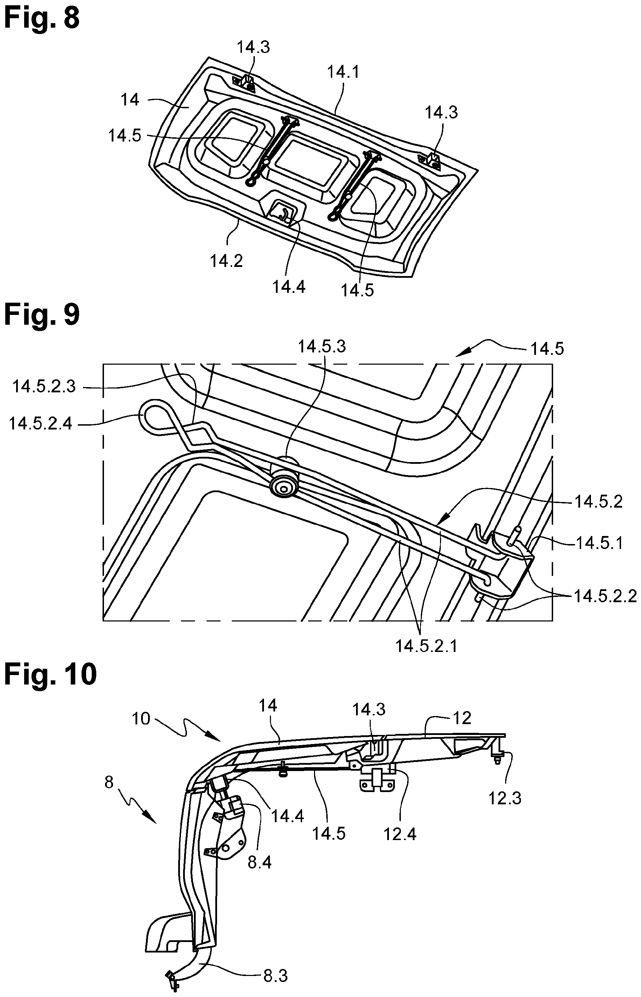

Figure 8 is a detailed view of the inner face of the second and rear element 14 of the upper lid 10 (figure 1). We can observe that hinges 14.3 are provided at the first and front edge 14.1. These hinges 14.3 are to be mounted onto the second and rear edge 12.2 of the first and front element 12 of the upper lid 10 (figure 1). A central lock strike 14.4 is mounted on the second element 14, adjacent the second and rear edge 14.2. That central lock strike 14.4 is designed for engaging with the upper lock 8.4 on the rear lid 8 (figure 5). Also, two retainers 14.5 are visible along the inner face of the second and rear element 14. These retainers 14.5 are designed for limiting the pivoting movement, around the hinges 14.3, of the second and rear element 14 of the upper lid 10 relative to the first and front element 12 thereof, as illustrated in figures 2 and 4. They are also designed for maintaining the second and rear element 14 of the upper lid 10 in a trunk opening position relative to the first and front element 12 thereof, as illustrated in figure 1 and 3.

Figure 9 is a detailed view of one of the retainers. The retainer 14.5 comprises a support 14.5.1 to be attached to the second and rear edge 12.2 of the first and front element 12 of the upper lid 10 (figure 1), an arm 14.5.2 pivotally mounted on the support 14.5.1 and a guide 14.5.3 fixed to the second and rear element 14 and configured for engaging with and sliding along the arm 14.5.2. The support 14.5.1 forms a bracket with a first wall for mounting on the first and front element 12 of the upper lid 10 (figure 1) and two lateral walls for pivotally engaging with the arm 14.5.2. The arm 14.5.2 is advantageously made of steel wire, for instance spring steel wire, with two longitudinal generally parallel portions 14.5.2.1 ending at a proximal end with two at about 90° bent portions 14.5.2.2 engaging in holes formed in the lateral walls of the support 14.5.1. The two longitudinal portions 14.5.2.1 converge towards distal end and thereafter abruptly diverge and again converge so as to form an abutting and engaging portion 14.5.2.3 for the guide 14.5.3. At the distal end of the arm 14.5.2, the two longitudinal steel wire portions 14.5.2.1 are linked to each other in a unitary manner by a loop portion 14.5.2.4. The guide 14.5.3 forms a circular groove that engages with the two longitudinal steel wire portions 14.5.2.1 so as to freely slide along these portions until they converge towards the abutting and engaging portion 14.5.2.3.

During operation of the upper lid 10, more particularly of the second and rear element 14 relative to the first and front element 12 (figure 1), for instance during opening of the second and rear element 14, each guide 14.5.3 freely slides along the corresponding arm 15.5.2 until the two longitudinal steel wire portions 14.5.2.1 of the arm 14.5.2 converge. From about that position, the groove of the guide 14.5.3 slides with a progressively increasing friction against the two longitudinal steel wire portions 14.5.2.1 until it reaches the abutting and engaging portion 14.5.2.3. Once that position is attained, the guide 14.5.3 is held is the abutting and engaging portion 14.5.2.3 and can be slid back out of that portion when exerting a pulling force on the second and rear element 14 that is enough for elastically deforming the two longitudinal steel wire portions 14.5.2.1 of the arm so as to separate them and allow the guide the pass along towards the support 14.5.1. The above detailed lateral retainer is an example, being understood that other retainers can be considered. Also the above detailed features of the retainer can be taken in isolation or associated with some of others in any combination.

Figure 10 is a longitudinal sectional view of the upper and rear lids in a trunk closing position, summarizing the various features detailed above. We can observe the first and front element 12 of the upper lid 10, with the hinges 12.3 to be mounted to a fixed part of the bodywork and the lateral locks engaging with corresponding strikes on the bodywork. We can also observe the second and rear element 14 of the upper lid 10, with the hinges 14.3 mounted on the first and front element 12 thereof. The retainers 14.5 along in inner side of the second and rear element 12 are visible. The central lock strike 14.4 engaging with the upper central lock 8.4 of the rear lid 8 are also well visible. The hinges 8.3 of the rear lid 8 are also well visible.

## Claims

1. Vehicle (2) with a bodywork (4) comprising a trunk (6) with an upper lid (10) for selectively opening and closing said trunk, the upper lid comprising:
- a first element (12) with a first edge (12.1) pivotally attached to a fixed part of the bodywork (4) and a second edge (12.2) opposed to said first edge (12.1); and
- a second element (14) with a first edge (14.1) pivotally attached to the second edge (12.2) of the first element (12);
whereby the upper lid (10) comprises at least one retainer (14.5) limiting a pivoting movement of the second element (14) relative to the first element (12) to an angle of not more than 100°, wherein each of the at least one retainer (14.5) comprises a support (14.5.1) attached to the second edge (12.2) of the first element (12) and an arm (14.5.2) pivotally mounted on the support (14.5.1) and extending along an inner face of the second element (14), said arm being slidable along a guide (14.5.3) on said inner face of said second element (14) and comprising at a distal end means (14.5.2.3) for abutting with said guide (14.5.3), wherein the means (14.5.2.3) for abutting with the guide (14.5.3) is also configured for engaging with said guide so as to hold the second element (14) in a trunk opening position, **characterised in that** the arm (14.5.2) comprises two longitudinal portions of steel wire (14.5.2.1) progressively converging towards the distal end of the arm and thereafter abruptly diverging and again converging so as to form the means for engaging and abutting (14.5.2.3), the guide (14.5.3) forming a circular groove slidably engaging with the two longitudinal portions of steel wire (14.5.2.1), and able, under application of a longitudinal load, to engage with the means for abutting and engaging (14.5.2.3) by elastically deforming the two longitudinal portions of steel wire (14.5.2.1).

2. Vehicle (2) according to claim 1, wherein the first and second elements (12, 14) are aligned and horizontal in a trunk closing position.

3. Vehicle (2) according to one of claims 1 and 2, wherein the at least one retainer (14.5) is mounted on an inner panel of each of the first and second elements (12, 14).

4. Vehicle (2) according to any one of claims 1 to 3, wherein the first element (12) comprises, at two opposed lateral positions adjacent the second edge of said first element, locking elements (12.4) for engaging with lateral fixed parts of the bodywork (4) inside the trunk (6), said locking elements being manually operable by a user having opened the second element (14).

5. Vehicle (2) according to any one of claims 1 to 4, wherein in a trunk fully opening position of the upper lid (10), the first element (12) is vertical or inclined of not more than 20° relative to the vertical, and the second element (14) is horizontal or inclined of not more than 20° relative to the horizontal.

6. Vehicle (2) according to any one of claims 1 to 5, wherein the trunk (6) is a rear end of the vehicle, the second element (14) being at the rear of the first element (12).

7. Vehicle (2) according to any one of claims 1 to 6, wherein the trunk (6) comprises a rear lid (8) with a first edge (8.1) pivotally mounted on a fixed part of the bodywork (4) and a second edge (8.2) adjacent the second edge (14.2) of the second element (14) of the upper lid (10) when both said upper and rear lids (10, 8) are in trunk closing positions.

## Patentansprüche

1. Fahrzeug (2) mit einer Karosserie (4), die einen Kofferraum (6) mit einem oberen Deckel (10) zum selektiven Öffnen und Schließen des Kofferraums umfasst, wobei der obere Deckel umfasst:
- ein erstes Element (12) mit einer ersten Kante (12.1), die schwenkbar an einem festen Teil der Karosserie (4) angebracht ist, und einer zweiten Kante (12.2), die der ersten Kante (12.1) gegenüberliegt; und
- ein zweites Element (14) mit einer ersten Kante (14.1), die schwenkbar an der zweiten Kante (12.2) des ersten Elements (12) angebracht ist; wobei der obere Deckel (10) mindestens einen Halter (14.5) umfasst, der eine Schwenkbewegung des zweiten Elements (14) relativ zum ersten Element (12) auf einen Winkel von nicht mehr als 100° begrenzt, wobei jeder der mindestens einen Halter (14.5) eine Stütze (14.5.1) umfasst, die an der zweiten Kante (12.2) des ersten Elements (12) angebracht ist, und einen Arm (14.5.2), der schwenkbar an der Stütze (14.5.1) angebracht ist und sich entlang einer Innenfläche des zweiten Elements (14) erstreckt, wobei der Arm entlang einer Führung (14.5.3) an der Innenfläche des zweiten Elements (14) verschiebbar ist und an einem distalen Ende Mittel (14.5.2.3) zum Anstoßen an die Führung (14.5.3) umfasst, wobei die Mittel (14.5.2.3) zum Anstoßen an die Führung (14.5.3) auch so konfiguriert sind, dass sie mit der Führung in Eingriff kommen, um das zweite Element zu halten. Element (14) in einer Kofferraumöffnungsposition, **dadurch gekennzeichnet, dass** der Arm (14.5.2) zwei Längsabschnitte aus Stahldraht (14.5.2.1) umfasst, die in Richtung des distalen Endes des Arms zunehmend zusammenlaufen und danach abrupt divergieren und erneut zusammenlaufen, um die Mittel zum Eingreifen und Anstoßen (14.5.2.3) zu bilden, wobei die Führung (14.5.3) eine kreisförmige Nut bildet, die gleitend mit den beiden Längsabschnitten aus Stahldraht (14.5.2.1) in Eingriff kommt und unter Anwendung einer Längslast in der Lage ist, mit den Mitteln zum Anstoßen und Eingreifen (14.5.2.3) durch elastisches Verformen der beiden Längsabschnitte aus Stahldraht (14.5.2.1) in Eingriff zu kommen.

2. Fahrzeug (2) nach Anspruch 1, wobei das erste und das zweite Element (12, 14) in einer Kofferraumschließposition ausgerichtet und horizontal sind.

3. Fahrzeug (2) nach einem der Ansprüche 1 und 2, wobei die mindestens eine Halterung (14.5) an einer Innenplatte des ersten und zweiten Elements (12, 14) montiert ist.

4. Fahrzeug (2) nach einem der Ansprüche 1 bis 3, wobei das erste Element (12) an zwei gegenüberliegenden seitlichen Positionen neben der zweiten Kante des ersten Elements Verriegelungselemente (12.4) zum Einrasten in seitliche feste Teile der Karosserie (4) im Inneren des Kofferraums (6) aufweist, wobei die Verriegelungselemente von einem Benutzer manuell betätigt werden können, der das zweite Element (14) geöffnet hat.

5. Fahrzeug (2) nach einem der Ansprüche 1 bis 4, wobei in einer vollständig geöffneten Kofferraumposition des oberen Deckels (10) das erste Element (12) vertikal oder um nicht mehr als 20° relativ zur Vertikalen geneigt ist und das zweite Element (14) horizontal oder um nicht mehr als 20° relativ zur Horizontalen geneigt ist.

6. Fahrzeug (2) nach einem der Ansprüche 1 bis 5, wobei der Kofferraum (6) ein hinteres Ende des Fahrzeugs ist, wobei sich das zweite Element (14) hinter dem ersten Element (12) befindet.

7. Fahrzeug (2) nach einem der Ansprüche 1 bis 6, wobei der Kofferraum (6) einen Heckdeckel (8) mit einer ersten Kante (8.1) umfasst, die schwenkbar an einem festen Teil der Karosserie (4) montiert ist, und einer zweiten Kante (8.2), die neben der zweiten Kante (14.2) des zweiten Elements (14) des oberen Deckels (10) liegt, wenn sich sowohl der obere als auch der Heckdeckel (10, 8) in der Kofferraumschließposition befinden

## Revendications

1. Véhicule (2) avec une carrosserie (4) comprenant un coffre (6) avec un couvercle supérieur (10) pour ouvrir et fermer sélectivement ledit coffre, le couvercle supérieur comprenant :
- un premier élément (12) avec un premier bord (12.1) fixé de manière pivotante à une partie fixe de la carrosserie (4) et un deuxième bord (12.2) opposé audit premier bord (12.1) ; et
- un deuxième élément (14) avec un premier bord (14.1) fixé de manière pivotante au deuxième bord (12.2) du premier élément (12) ; dans lequel le couvercle supérieur (10) comprend au moins un élément de retenue (14.5) limitant un mouvement de pivotement du deuxième élément (14) par rapport au premier élément (12) à un angle ne dépassant pas 100°, dans lequel chacun desdits éléments de retenue (14.5) comprend un support (14.5.1) fixé au deuxième bord (12.2) du premier élément (12) et un bras (14.5.2) monté pivotant sur le support (14.5.1) et s'étendant le long d'une face intérieure du deuxième élément (14), ledit bras pouvant coulisser le long d'un guide (14.5.3) sur ladite face intérieure dudit deuxième élément (14) et comprenant à une extrémité distale des moyens (14.5.2.3) pour venir en butée avec ledit guide (14.5.3), dans lequel les moyens (14.5.2.3) pour venir en butée avec le guide (14.5.3) sont également configurés pour venir en prise avec ledit guide de manière à pour maintenir le second élément (14) dans une position d'ouverture de coffre, **caractérisé en ce que** le bras (14.5.2) comprend deux portions longitudinales de fil d'acier (14.5.2.1) convergeant progressivement vers l'extrémité distale du bras puis divergeant brusquement et convergeant à nouveau de manière à former les moyens d'engagement et de butée (14.5.2.3), le guide (14.5.3) formant une rainure circulaire venant en prise coulissante avec les deux portions longitudinales de fil d'acier (14.5.2.1), et pouvant, sous application d'une charge longitudinale, venir en prise avec les moyens de butée et de butée (14.5.2.3) par déformation élastique des deux portions longitudinales de fil d'acier (14.5.2.1).

2. Véhicule (2) selon la revendication 1, dans lequel les premier et second éléments (12, 14) sont alignés et horizontaux dans une position de fermeture de coffre.

3. Véhicule (2) selon l'une des revendications 1 et 2, dans lequel le ou les éléments de retenue (14.5) sont montés sur un panneau intérieur de chacun des premier et deuxième éléments (12, 14).

4. Véhicule (2) selon l'une quelconque des revendications 1 à 3, dans lequel le premier élément (12) comprend, à deux positions latérales opposées adjacentes au deuxième bord dudit premier élément, des éléments de verrouillage (12.4) destinés à venir en prise avec des parties fixes latérales de la carrosserie (4) à l'intérieur du coffre (6), lesdits éléments de verrouillage étant actionnables manuellement par un utilisateur ayant ouvert le deuxième élément (14).

5. Véhicule (2) selon l'une quelconque des revendications 1 à 4, dans lequel dans une position d'ouverture complète du coffre du couvercle supérieur (10), le premier élément (12) est vertical ou incliné d'au plus 20° par rapport à la verticale, et le deuxième élément (14) est horizontal ou incliné d'au plus 20° par rapport à l'horizontale.

6. Véhicule (2) selon l'une quelconque des revendications 1 à 5, dans lequel le coffre (6) est une extrémité arrière du véhicule, le deuxième élément (14) étant à l'arrière du premier élément (12).

7. Véhicule (2) selon l'une quelconque des revendications 1 à 6, dans lequel le coffre (6) comprend un couvercle arrière (8) avec un premier bord (8.1) monté pivotant sur une partie fixe de la carrosserie (4) et un deuxième bord (8.2) adjacent au deuxième bord (14.2) du deuxième élément (14) du couvercle supérieur (10) lorsque lesdits couvercles supérieur et arrière (10, 8) sont tous deux en position de fermeture du coffre
